(19) Europäisches Patentamt
European Patent Office
Office européen des brevets

(11) **EP 1 968 181 B1**

(12) **EUROPÄISCHE PATENTSCHRIFT**

(45) Veröffentlichungstag und Bekanntmachung des Hinweises auf die Patenterteilung:
**08.08.2012   Patentblatt 2012/32**

(51) Int Cl.:
***H02P 1/02*** *(2006.01)*

(21) Anmeldenummer: **08003991.0**

(22) Anmeldetag: **04.03.2008**

(54) **Verfahren zur Wiederzuschaltung eines Drehstrommmotors und elektrische Schaltung zur Durchführung des Verfahrens**

Method for restarting a 3-phase motor and electric switch for carrying out the method

Procédé de remise en circuit d'un moteur rotatif et commutation électrique destinée à exécuter le procédé

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **09.03.2007   DE 102007011510**

(43) Veröffentlichungstag der Anmeldung:
**10.09.2008   Patentblatt 2008/37**

(73) Patentinhaber: **ATLAS COPCO ENERGAS GMBH 50999 Köln (DE)**

(72) Erfinder:
• **Kern, Ulrich**
  **53347 Witterschlick (DE)**

• **Pöhler, Stefan**
  **97297 Waldbüttelbrunn (DE)**
• **Seinsch, Hans Otto, Prof. Dr.-Ing.**
  **30826 Garbsen (DE)**

(74) Vertreter: **Albrecht, Rainer Harald et al Andrejewski - Honke Patent- und Rechtsanwälte An der Reichsbank 8 45127 Essen (DE)**

(56) Entgegenhaltungen:
**EP-A2- 1 492 142     WO-A1-2005/112248
GB-A- 2 165 408**

## Beschreibung

Die Erfindung betrifft ein Verfahren zur Wiederzuschaltung eines eine Arbeitsmaschine (z. B. Getriebe-Turboverdichter) antreibenden Drehstrommotors (Induktions- oder Synchronmotors) nach einer Trennung desselben von einer Versorgungsspannung und bei dem Vorliegen einer von einem Läuferrestfeld induzierten Restfeldspannung sowie eine elektrische Schaltung zur Durchführung des Verfahrens.

Viele Antriebe in unterschiedlichen Anwendungen erfordern nach einer Störung des Speisenetzes und der Trennung des Drehstrommotors von der Versorgungsspannung eine möglichst schnelle und mit geringem Drehzahlverlust verbundene Wiederzuschaltung des antreibenden Drehstrommotors wobei jedoch Beschädigungen des Drehstrommotors, der von dem Motor angetriebenen Maschine sowie allen anderen Konstruktionsteilen des Wellenstranges (Kupplungen, Getriebe usw.) zwischen der Maschine und dem Motor verhindert werden müssen. Zu berücksichtigen ist dabei, dass der Motor nach der Trennung von der Versorgungsspannung weiterläuft, wobei durch das vorliegende Läuferrestfeld eine Restfeldspannung von Drehzahlfrequenz induziert wird. Aufgrund des Gegenmomentes der angetriebenen Maschine und durch die Reibung läuft der Motor aus. Für Drehstrommotoren stellt nach erfolgtem Netzausfall die Wiederkehr der Versorgungsspannung mit Phasenoppositionen zur Restfeldspannung eine extreme Belastung hinsichtlich der auftretenden Stoßströme und Stoßmomente dar. Besonders bei einem hohen Massenträgheitsmoment der Arbeitsmaschine können diese motorseitig eingeleiteten Stoßmomente extreme Drehschwingungsbelastungen im gesamten Antriebsstrang hervorrufen, so dass sämtliche Komponenten des Antriebsstrangs wie Motor, Kupplung und Arbeitsmaschine entsprechend robust und so für den Normalbetrieb überdimensioniert ausgelegt werden müssen. Ein Berechnungsverfahren zur Bestimmung der bei einer Netzumschaltung auftretenden Drehmomentbeanspruchung ist aus dem Aufsatz "Archiv für Elektrotechnik 71, 1988, Seiten 399 bis 411" bekannt.

Um eine Überdimensionierung der Komponenten des Antriebsstrangs oder den Einsatz einer zusätzlichen Rutschkupplung zu vermeiden ist es aus der Praxis bekannt, den Motor bei einer Störung des Versorgungsnetzes durch das Öffnen eines Schalters zu trennen und nachfolgend kontrolliert mit einem Reservenetz oder nach Behebung der Störung erneut mit dem Versorgungsnetz durch das Schließen des Schalters zu verbinden. Wie in dem Aufsatz "ELEKTRIE, Berlin 46, 1992, Seiten 456 - 460" dargestellt, sind aus der Praxis Verfahren zur Kurzzeit- und zur Langzeit-Umschaltung zur erneuten Spannungsbeaufschlagung eines Drehstrommotors beim Vorliegen einer von einem Läuferrestfeld induzierten Restspannung bekannt. Um bei einer Kurzzeit-Umschaltung innerhalb von typischerweise wenigen Millisekunden eine übermäßige Drehmomentbeanspruchung im Antriebsstrang zu verhindern, werden während des Betriebs ständig die Differenzen zwischen den Amplituden, den Frequenzen und den Phasenverschiebungen der Spannungen eines Versorgungsnetzes und eines Reservenetzes überwacht. Nur wenn sämtliche Differenzen enge Grenzen einhalten, kann bei einer Störung des Versorgungsnetzes innerhalb von wenigen Millisekunden eine Umschaltung auf das Reservenetz erfolgen. Sind die Bedingungen für eine Kurzzeit-Umschaltung nicht erfüllt, so erfolgt eine Langzeit-Umschaltung, wobei abgewartet wird bis der Drehstrommotor so weit abgebremst ist, dass bei der Spannungsbeaufschlagung unabhängig von der Phasendifferenz der Versorgungsspannung und der Restfeldspannung eine übermäßige Drehmomentbeanspruchung ausgeschlossen werden kann. Das Verfahren der Langzeit-Umschaltung gewährleistet zwar moderate Stoßmomente, hat aber den Nachteil, dass die Drehzahl so stark abfällt, dass dadurch der Arbeitsprozess praktisch unterbrochen wird. Schließlich besteht bei der Langzeit-Umschaltung auch die Gefahr, dass die Wiederzuschaltung bei einer torsions- oder biegekritischen Drehzahl des Antriebsstrangs erfolgt und durch den Schaltvorgang große Wechselmomente entstehen, welche die Bauteile im Wellenstrang gefährden oder gar die automatische Sicherheitsabschaltung aktiviert wird.

Ein Verfahren zur Wiederzuschaltung eines Drehstrommotors nach einer Trennung desselben von einer Versorgungsspannung bei dem Vorliegen einer von einem Läuferrestfeld induzierten Restspannung ist aus der WO 2005/112248 A1 bekannt, wobei die zeitlichen Verläufe der Restfeldspannung und der Versorgungsspannung aufgenommen werden, um einen Zeitpunkt für die Wiederzuschaltung zu bestimmen.

Vor diesem Hintergrund liegt der Erfindung die Aufgabe zugrunde, ein Verfahren zur Wiederzuschaltung eines Drehstrommotors nach einer Trennung desselben von einer Versorgungsspannung bei dem Vorliegen einer von einem Läuferrestfeld induzierten Restfeldspannung anzugeben, welches bei einer Minimierung der Drehmomentbeanspruchungen eine Wiederzuschaltung bei einer beliebig hohen Restfeldspannung ermöglicht.

Gegenstand der Erfindung und Lösung der Aufgabe ist ein Verfahren zur Wiederzuschaltung eines Drehstrommotors gemäß Anspruch 1 und eine elektrische Schaltung gemäß Anspruch 8. Durch das erfindungsgemäße Verfahren kann ein nahezu stoßfreies Zuschalten des Motors nach einer Trennung von einem Versorgungsnetz erfolgen, wobei üblicherweise der Drehzahlabfall sehr gering gehalten werden kann.

Während bei der bekannten Kurzzeit-Umschaltung stets ein Reservenetz bereit gehalten werden muss und eine Umschaltung nur erfolgen kann, wenn die Amplituden, die Frequenzen und die Phasen von Reservenetz und Versorgungsnetz weitgehend übereinstimmen, kann nach dem erfindungsgemäßen Verfahren die erneute Bereitstellung der Versorgungsspannung durch ein Reservenetz oder nach dem Wegfall einer Störung durch das Versorgungsnetz selbst erfolgen. Die Erfindung beruht insbesondere auf der Erkenntnis, dass durch das Auslaufen des Motors nach der Trennung von der Versorgungsspannung die Winkelgeschwindigkeit ausgehend von der Netzfrequenz der Versorgungsspannung abnimmt, so dass die Restfeldspannung und die Versorgungsspannung bei dem Auslaufen des Motors zu wiederkehrenden Zeitpunkten etwa in Phase sind. Durch die Bestimmung des zeitlichen Verlaufes der Restfeldspannung kann dabei ein Zeitpunkt $t_s$ im Voraus bestimmt werden, zu dem die Phasendifferenz einen vorgegebenen Höchstwert $\Delta\varphi_{max}$ unterschreitet, wobei unter Berücksichtigung der Schaltzeitverzögerung $\tau_s$ vor dem Erreichen des Zeitpunktes $t_s$ ein Schaltbefehl ausgelöst wird, so dass die Spannungsbeaufschlagung etwa zu dem vorausberechneten Zeitpunkt $t_s$ erfolgt.

In einer bevorzugten Ausgestaltung des erfindungsgemäßen Verfahrens ist vorgesehen, dass die Zeitpunkte der Nulldurchgänge der Restfeldspannung bestimmt werden, wobei die Winkelgeschwindigkeit und die Änderung der Winkelgeschwindigkeit der Restfeldspannung aus den Zeitintervallen zwischen den Nulldurchgängen ermittelt werden. Die Ermittlung der Nulldurchgänge ist aus messtechnischer Sicht, beispielsweise mit einem Analog-Komparator, besonders leicht und zuverlässig zu realisieren und gewährleistet die im Rahmen des erfindungsgemäßen Verfahrens erforderliche Genauigkeit. Die Winkelgeschwindigkeit lässt sich dabei als Quotient der Phasendifferenz und der Zeitdifferenz zwischen zwei Messwerten gemäß

$$\omega_i = (\varphi_{i+1} - \varphi_{i-1}) \, / \, (t_{i+1} - t_{i-1})$$

bestimmen. Für die Änderung der Winkelgeschwindigkeit gilt entsprechend:

$$\frac{d\omega_i}{dt} = (\omega_{i+1} - \omega_{i-1}) \, / \, (t_{i+1} - t_{i-1}).$$

Zur Vorausberechnung des Phasenwinkels $\varphi_N$ der Netzspannung können analog mehrere Nulldurchgänge bestimmt werden, wobei jedoch üblicherweise die Netzfrequenz $f_N$ mit einer hohen Genauigkeit bekannt ist, so dass der zeitliche Verlauf des Phasenwinkels ausgehend von einem Nulldurchgang gemäß

$$\varphi_N \, (t) = 2\pi \cdot f_N \cdot t \qquad\qquad (2\pi \cdot f_N = \omega_N)$$

bestimmt werden kann.

Der zeitliche Verlauf des Phasenwinkels $\varphi R$ der Restfeldspannung ergibt sich unter Berücksichtigung der aktuell bestimmten Winkelgeschwindigkeit $\omega_i = \omega_R$ und der ermittelten zeitlichen Änderung der Winkelgeschwindigkeit gemäß

$$\varphi_R \, (t) = \omega_R \cdot t + \frac{1}{2} \cdot \frac{d\omega_R}{dt} \cdot t^2.$$

Dabei ist t die Zeit zwischen der vorletzten Messung und dem Zuschalten des Leistungsschalters. $\omega_R$ ist die Kreisfrequenz der Restfeldspannung zum Zeitpunkt der vorletzten Messung und $d_{\omega R}/dt$ ist die Kreisfrequenzänderung der Restfeldspannung zum Zeitpunkt der vorletzten Messung. Neben dem zeitlichen Verlauf der Restfeldspannung und der Versorgungsspannung kann auch bevorzugt zumindest die Amplitude $A_R$ der Restfeldspannung ermittelt werden, wobei bei dem Abfall der Amplitude der Restfeldspannung unter einer vorgegebenen Höchstspannung $A_{max}$ der Schaltbefehl für die Spannungsbeaufschlagung unabhängig von der Phasenbeziehung zwischen der Restfeldspannung und der Versorgungsspannung ausgelöst wird, Insbesondere bei einer schnellen Abbremsung des Drehstrommotors besteht die Möglichkeit, dass bereits vor dem vorausberechneten Unterschreiten der vorgegebenen Phasendifferenz $\Delta\varphi_{max}$ eine Drehzahl des Motors erreicht wird, bei der unabhängig von der Phasenbeziehung zwischen Restfeldspannung und Versorgungsspannung die Drehmomentbeanspruchung in einem akzeptablen Rahmen ist, so dass eine Beschädigung des Wellenstranges ausgeschlossen werden kann. Insbesondere wenn die Drehmomentbeanspruchungen geringer als beim Anlaufen des Drehstrommotors aus dem Stillstand sind, ist eine Wiederzuschaltung üblicherweise unkritisch.

Da erfindungsgemäß die aktuelle Winkelgeschwindigkeit $\omega_R$ der Restfeldspannung bestimmt wird, kann für vorgegebene Frequenzbereiche, beispielsweise für Frequenzbereiche in der Nähe einer systemkritischen Drehzahl des Wellenstranges, vorgesehen sein, dass zur Vermeidung von Beschädigungen die Wiederzuschaltung auch dann unterbleibt, wenn entweder die Phasendifferenz den vorgegebenen Höchstwert $\Delta\varphi_{max}$ oder die Amplitude $A_R$ der Restfeldspannung eine vorgegebene Höchstspannung $A_{max}$ unterschreitet. Sobald der vorgegebene Frequenzbereich verlassen wird, erfolgt beim Vorliegen der entsprechenden Voraussetzungen, d. h. bei der nächsten Unterschreitung der vorgegebenen Phasendifferenz oder bei einem Unterschreiten der vorgegebenen Höchstspannung, die Wiederzuschaltung des Drehstrommotors.

Drehstrommotoren, beispielsweise zum Antrieb von Turboverdichtern, weisen in der Praxis häufig eine Leistung von vielen Kilowatt bis zu mehreren Megawatt auf und sind typischerweise dreisträngig ausgeführt. Da bei Hochspannungsmotoren der Sternpunkt durchweg nicht zugänglich ist, wird üblicherweise als Restfeldspannung bzw. Versorgungsspannung jeweils die verkettete Spannung (Leiterspannung) zwischen zwei Strängen mit jeweils zwei Messaufnehmern gemessen.

Die elektrische Schaltung gemäß die erfindung weist eine Messwerterfassung, die zur Bestimmung von zeitlichen Verläufen einer Restfeldspannung und einer Versorgungsspannung einerseits an einen Drehstrommotor und andererseits an ein Versorgungsnetz bzw. ein Reservenetz anschließbar ist, einen Gleichstromsteller zur Erzeugung eines Schaltimpulses für einen Leistungsschalter und einen Microcontroller, der die Vorausberechnung der Phasenbeziehung zwischen der Restfeldspannung und der Versorgungsspannung ermöglicht, auf.

Die Restfeldspannung und die Versorgungsspannung weisen typischerweise Amplituden von mehreren tausend Volt auf, so dass die Messwerterfassung vorzugsweise Tastköpfe zum Anschluss an den Drehstrommotor und die Versorgungsspannung aufweist, welche als Spannungswandler dienen und die gemessene Spannung beispielsweise auf einen Bereich zwischen -10 Volt und +10 Volt reduzieren.

Der Microcontroller, der zur Durchführung des erfindungsgemäßen Verfahrens typischerweise einen Analog-Digitalkonverter, einen Analog-Komparator, mehrere Timer und zumindest einen Messwertspeicher aufweist, ist vorzugsweise mit einer Standard-Programmierschnittstelle zum Anschluss an einen Computer oder ein Computernetzwerk ausgerüstet, damit eine leichte Konfiguration und insbesondere auch eine leichte Eingabe von Vorgabewerten möglich ist.

Die elektrische Schaltung kann im Rahmen der Erfindung auch eine Statusanzeige und/oder eine Schnittstelle zur Ausgabe von Statusmeldungen aufweisen, so dass einem Benutzer der Zustand der elektrischen Schaltung und das Vorliegen einer Störung des Versorgungsnetzes unmittelbar angezeigt werden können. Denkbar ist auch, dass ausgegebene Statusmeldungen von einer zentralen Maschinen- oder Prozesssteuerung erfasst und weiterverarbeitet werden.

Zur erneuten Spannungsbeaufschlagung des Drehstrommotors nach einer Trennung desselben von einer Versorgungsspannung ist typischerweise ein Leistungsschalter vorgesehen, der einen Schaltimpuls von dem Gleichstromsteller erhält. Zur Auslösung des Leistungsschalters sind dabei häufig große Schaltströme erforderlich, so dass in einer bevorzugten Ausgestaltung der elektrischen Schaltung ein Ausgang des Microcontrollers als Steuersignal an einen vorzugsweise als MOSFET ausgeführten Feldeffekttransistor (FET) angeschlossen ist, der eine separate Eingangsspannung mit einer Ausgangsseite des Gleichstromstellers verbindet.

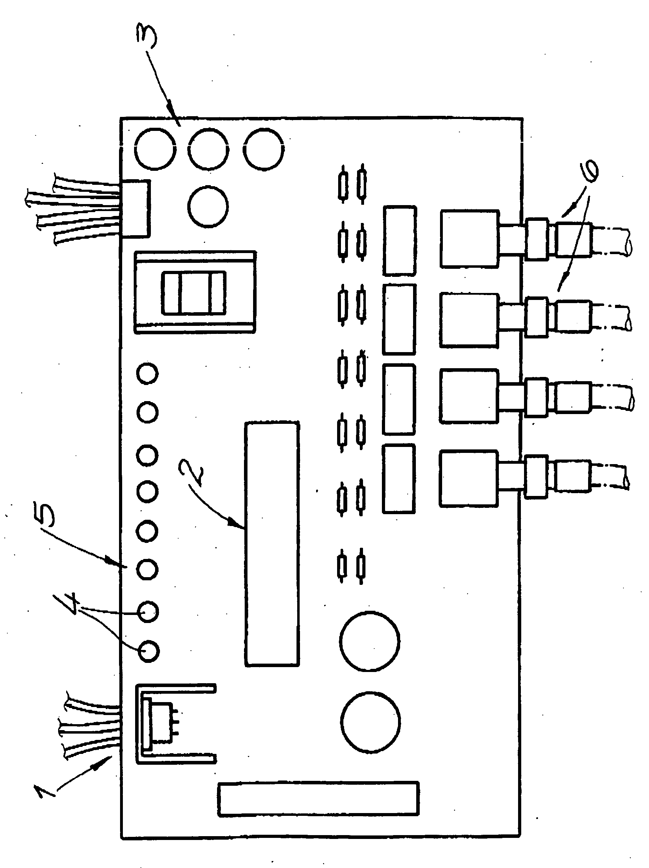

Die Erfindung wird nachfolgend anhand eines Ausführungsbeispiels unter Bezugnahme auf die einzige Figur erläutert. Die einzige Figur zeigt grob schematisiert eine Platine, auf der die erfindungsgemäße elektrische Schaltung realisiert ist.

Die elektrische Schaltung zur Durchführung des erfindungsgemäßen Verfahrens umfasst eine Messwerterfassung 1, einen Microcontroller 2 und einen Gleichstromsteller 3 zur Erzeugung eines Schaltimpulses für einen Leistungsschalter. Die Schaltung weist des Weiteren acht LED's 4 als Statusanzeige 5 sowie Anschlüsse 6 zur Programmierung des Microcontrollers und zur Ausgabe von Statusmeldungen auf.

Die Messwerterfassung 1 ist über jeweils zwei nicht dargestellte Tastköpfe an zwei Klemmen eines Drehstrommotors und an zwei Klemmen einer Versorgungsspannung angeschlossen. Die Versorgungsspannung wird dabei von einem Versorgungsnetz oder einem zusätzlichen Reservenetz, welches den Betrieb des Motors bei einem Ausfall des Versorgungsnetzes ermöglicht, bereit gestellt.

Der Microcontroller 2 verfügt über acht digitale Ausgänge, die zur Anzeige des gegenwärtigen Zustands mit den LED's 4 verbunden sind. Die erste LED 4 wird beim Start des Microcontrollers 2 eingeschaltet und zeigt an, dass die Schaltung arbeitet. Wenn die zweite LED 4 leuchtet, ist die Schaltung für eine Netzunterbrechung betriebsbereit. Die LED's 4 drei bis sechs zeigen den Ablauf einer Netzunterbrechung nach einer Trennung des Motors von der Versorgungsspannung an. Die dritte LED 4 leuchtet, wenn eine Netzunterbrechung in Bezug auf das Versorgungsnetz vorliegt und erlischt, wenn die Versorgungsspannung von einem Reservenetz oder erneut von dem Versorgungsnetz bereit gestellt wird. Die vierte LED 4 leuchtet, wenn zur Bestimmung der zeitlichen Verläufe der Phase der Restfeldspannung und der Versorgungsspannung die Nulldurchgänge der Versorgungsspannung bzw. der Restfeldspannung durch die Messwerterfassung 1 aufgenommen werden. Liegen ausreichend viele Messwerte vor, erlischt die vierte LED 4 und die fünfte LED 4 zeigt an, dass auf einen geeigneten vorausberechneten Zeitpunkt $t_s$ für die Spannungsbeaufschlagung gewartet wird. Sobald der Zeitpunkt $t_s$ erreicht ist, leuchtet die sechste LED 4, während die Schaltung in den Ursprungszustand zurückversetzt wird. Während die siebte LED 4 zu Diagnosezwecken bei der Entwicklung der Schaltung dient, gibt die achte LED an, wenn ein Schaltbefehl für den Leistungsschalter zur Wiederzuschaltung ausgelöst wird. Da der Leistungsschalter eine im Voraus bekannte Schaltverzögerung $\tau_s$ von typischerweise einigen zehn Millisekunden aufweist (z. B. $\tau_s$ = 60ms bei einem Leistungsschalter Typ DIL M300 der Möller GmbH), muss der Schaltbefehl entsprechend vor Erreichen des Zeitpunktes $t_s$ ausgelöst werden.

Die Berechnung des Zeitpunktes $t_s$ basiert auf der Erfassung der Phasenlage der Restfeldspannung an Anschlussklemmen des Motors und der Versorgungsspannung. Um die Phasenlage zu bestimmen, werden die Nulldurchgänge der Versorgungsspannung und der Restfeldspannung eines Stranges oder der verketteten Spannung zwischen zwei Strängen bestimmt. Diese Spannungen können direkt vor oder hinter dem Leistungsschalter abgegriffen werden.

Bei einer Störung des Versorgungsnetzes bei dem Betrieb der elektrischen Schaltung wird der Leistungsschalter geöffnet, wobei die Netzunterbrechung durch die dritte LED 4 angezeigt wird. In dem Fall, dass die Versorgungsspannung nach dem Öffnen des Leistungsschalters nach dem Wegfall der Störung erneut von dem Versorgungsnetz bereit gestellt werden soll, wird zunächst die Dauer der Netzunterbrechung ermittelt. Dazu wird zunächst die Dauer der Netzunterbrechung von der Messwerterfassung 1 bestimmt. Nachdem die Versorgungsspannung wieder zur Verfügung steht, wird von einem Analog-Komparator ein Nulldurchgang der Versorgungsspannung bestimmt, wobei durch die Bestimmung dieses Nulldurchgangs unter Berücksichtigung der Netzfrequenz die Phase der Versorgungsspannung vorausberechnet werden kann. Anschließend werden die Nulldurchgänge der Restfeldspannung ermittelt, wobei aus den Zeitabständen zwischen den Nulldurchgängen die Winkelgeschwindigkeit der Phase und die Änderung der Winkelgeschwindigkeit bestimmt werden. Aus den vorausberechneten Daten wird der Zeitpunkt $t_s$ bestimmt, zu dem die Phasendifferenz einen vorgegebenen Höchstwert $\Delta\varphi_{max}$ von beispielsweise 20° unterschreitet.

## Patentansprüche

1. Verfahren zur Wiederzuschaltung eines Drehstrommotors nach einer Trennung desselben von einer Versorgungsspannung bei dem Vorliegen einer von einem Läuferrestfeld induzierten Restfeldspannung, wobei die zeitlichen Verläufe der Restfeldspannung und der Versorgungsspannung aufgenommen werden, um einen Zeitpunkt für die Wiederzuschaltung zu bestimmen, **dadurch gekennzeichnet, dass** aus den zeitlichen Verläufen der Restfeldspannung und der Versorgungsspannung die Phasendifferenz zwischen den Spannungen vorausberechnet und ein Zeitpunkt ts im Voraus bestimmt wird, zu welchem die Phasendifferenz einen vorgegebenen Höchstwert $\Delta\varphi_{max}$ unterschreitet, wobei in einem zeitlichen Abstand, der einer vorausbestimmten Schaltzeitverzögerung $\tau_s$ entspricht, vor dem Erreichen des Zeitpunktes $t_s$ ein Schaltbefehl für die Wiederzuschaltung ausgelöst wird, so dass der Motor etwa zu dem Zeitpunkt $t_s$ an die Versorgungsspannung angeschlossen ist.

2. Verfahren nach Anspruch 1 **dadurch gekennzeichnet, dass** nach einer Trennung des Motors von einer Versorgungsspannung die erneute Bereitstellung der Versorgungsspannung entweder durch das ursprüngliche oder durch ein Reservenetz erfolgt.

3. Verfahren nach Anspruch 1 oder 2, **dadurch gekennzeichnet, dass** der Drehstrommotor dreisträngig ausgeführt ist und wobei die zeitlichen Verläufe der Restfeldspannung und der Versorgungsspannung jeweils mit zwei Messaufnehmern gewonnen werden.

4. Verfahren nach einem der Ansprüche 1 bis 3, **dadurch gekennzeichnet, dass** die Zeitpunkte der Nulldurchgänge der Restfeldspannung bestimmt werden und wobei die Winkelgeschwindigkeit und die Änderung der Winkelgeschwindigkeit der Restfeldspannung aus den Zeitintervallen zwischen den Nulldurchgängen bestimmt werden.

5. Verfahren nach einem der Ansprüche 1 bis 4, **dadurch gekennzeichnet, dass** die Vorausberechnung des zeitlichen Verlaufes der Netzspannung ausgehend von einem Nulldurchgang unter Annahme einer konstanten Netzfrequenz erfolgt und wobei die Vorausberechnung des zeitlichen Verlaufes der Restfeldspannung ausgehend von einem Nulldurchgang unter Berücksichtigung der aktuell bestimmten Winkelgeschwindigkeit und der ermittelten zeitlichen Änderung der Winkelgeschwindigkeit erfolgt.

6. Verfahren nach einem der Ansprüche 1 bis 5, **dadurch gekennzeichnet, dass** neben der Bestimmung des zeitlichen Verlaufes der Restfeldspannung und der Versorgungsspannung zumindest auch die Amplitude der Restfeldspannung ermittelt wird.

7. Verfahren nach Anspruch 6, **dadurch gekennzeichnet, dass** bei dem Abfall der Amplitude der Restfeldspannung unter eine vorgegebene Höchstspannung der Schaltbefehl für die Wiederzuschaltung unabhängig von der Phasenbeziehung zwischen der Restfeldspannung und der Versorgungsspannung ausgelöst wird.

**8.** Elektrische Schaltung die dass Verfahren nach einem der Ansprüche 1 bis 7 durchführt, mit einer Messwerterfassung (1), die zur Bestimmung von zeitlichen Verläufen der Phasen einer Restfeldspannung und einer Versorgungsspannung einerseits an einen Drehstrommotor und andererseits an ein Versorgungsnetz bzw. ein Reservenetz anschließbar ist, mit einem Gleichstromsteller (3) zur Erzeugung eines Schaltimpulses für einen Leistungsschaltere und mit einem Microcontroller (2), der eine Vorausberechnung der Phasenbeziehung zwischen der Restfeldspannung und der Versorgungsspannung ermöglicht.

**9.** Elektrische Schaltung nach Anspruch 8, **dadurch gekennzeichnet, dass** die Messwerterfassung (1) Tastköpfe zum Anschluss an den Drehstrommotor und die Versorgungsspannung aufweist.

**10.** Elektrische Schaltung nach Anspruch 8 oder 9, **dadurch gekennzeichnet, dass** der Microcontroller (2) eine Standard-Programmierschnittstelle zum Anschluss an einen Computer oder ein Computernetzwerk aufweist.

**11.** Elektrische Schaltung nach einem der Ansprüche 8 bis 10, **dadurch gekennzeichnet, dass** die Schaltung eine Statusanzeige (5) und/oder eine Schnittstelle zur Ausgabe von Statusmeldungen aufweist.

**12.** Elektrische Schaltung nach einem der Ansprüche 8 bis 11, **dadurch gekennzeichnet, dass** der Microcontroller (2) einen Analog-Digital-Konverter, einen Analog-Komparator, Timer und Messwertspeicher aufweist.

**13.** Elektrische Schaltung nach einem der Ansprüche 8 bis 12, **dadurch gekennzeichnet, dass** ein Ausgang des Microcontrollers (2) als Steuersignal an einen Feldeffekttransistor (FET/MOSFET) angeschlossen ist, der eine separate Eingangsspannung mit einer Ausgangsseite des Gleichstromstellers (3) verbindet.

**Claims**

**1.** A method for the reconnection of an polyphase motor after an isolation of the same from a supply voltage, with the presence of a residual field voltage induced by a rotor residual field, wherein
the time-wise profiles of the residual field voltage and the supply voltage are recorded so as to determine a time for the reconnection, **characterised in that**, from the time-wise profiles of the residual field voltage and the supply voltage the phase difference between the voltages is predicted and a time $t_s$ is determined in advance, at which the phase difference is less than a prescribed maximum value $\Delta\phi_{max}$, wherein at a distance in time, which corresponds to a predicted switching delay $T_s$, before the arrival at the time $t_s$, a switching command is triggered for the reconnection, so that the motor is connected to the supply voltage at approximately the time $t_s$.

**2.** The method in accordance with Claim 1, **characterised in that**, after an isolation of the motor from a supply voltage the renewed provision of the supply voltage takes place either through the original network or through a reserve network.

**3.** The method in accordance with Claim 1 or 2, **characterised in that**, the polyphase motor is embodied as a three-phase motor, and wherein the time-wise profiles of the residual field voltage and the supply voltage are in each case obtained with two sensors.

**4.** The method in accordance with one of the Claims 1 to 3, **characterised in that**, the times at which the residual field voltage passes through zero are determined, and wherein the angular velocity and the alteration of angular velocity of the residual field voltage are determined from the time intervals between the points at which it passes through zero.

**5.** The method in accordance with one of the Claims 1 to 4, **characterised in that**, the prediction of the time-wise profile of the network voltage starting from a passage through zero is undertaken with the assumption of a constant network frequency, and wherein the prediction of the time-wise profile of the residual field voltage starting from a passage through zero is undertaken taking into account the angular velocity currently determined, and the time-wise variation of angular velocity that has been determined.

**6.** The method in accordance with one of the Claims 1 to 5, **characterised in that**, in addition to the determination of the time-wise profile of the residual field voltage and the supply voltage, at least the amplitude of the residual field voltage is also determined.

**7.** The method in accordance with Claim 6, **characterised in that**, when the amplitude of the residual field voltage drops below a prescribed maximum voltage the switching command for the reconnection is triggered independently of the phase relationship between the residual field voltage and the supply voltage.

**8.** An electrical circuit that executes the method in accordance with one of the Claims 1 to 7, with a data logger (1), which for purposes of determining time-wise profiles of the phases of a residual field voltage and a supply voltage can be connected on one side to an polyphase motor, and on the other side to a supply network, or a reserve network, with a DC chopper controller (3) for purposes of generating a switching pulse for a power switch, and with a microcontroller (2), which enables a prediction of the phase relationship between the residual field voltage and the supply voltage.

**9.** The electrical circuit in accordance with Claim 8, **characterised in that**, the data logger (1) has probes for connection to the polyphase motor and the supply voltage.

**10.** The electrical circuit in accordance with Claim 8 or 9, **characterised in that**, the microcontroller (2) has a standard programming interface for connection to a computer, or a computer network.

**11.** The electrical circuit in accordance with one of the Claims 8 to 10, **characterised in that**, the circuit has a status display (5) and/or an interface for the output of status messages.

**12.** The electrical circuit in accordance with one of the Claims 8 to 11, **characterised in that**, the microcontroller (2) has an analogue-to-digital converter, an analogue comparator, a timer and a data store.

**13.** The electrical circuit in accordance with one of the Claims 8 to 12, **characterised in that**, one output of the microcontroller (2) is connected as a control signal to a field effect transistor (FET/MOSFET), which connects a separate input voltage with an output side of the DC chopper controller (3).

**Revendications**

**1.** Procédé pour la reconnexion d'un moteur triphasé après une séparation de celui-ci d'une alimentation en tension avec la présence d'une tension de champ résiduel induite par un champ résiduel de rotor,
les courbes dans le temps de la tension de champ résiduel et de la tension d'alimentation étant enregistrées pour déterminer un moment pour la remise en route, **caractérisé en ce que** la différence de phase entre les tensions est calculée à l'avance à partir des courbes dans le temps de la tension de champ résiduel et de la tension d'alimentation et un instant $t_s$ étant déterminé à l'avance où la différence de phase est inférieure à une valeur maximale prédéfinie $\Delta\varphi_{max}$, une instruction de commutation pour la remise en route étant déclenchée dans un intervalle de temps qui correspond à une temporisation de commutation $T_s$ calculée à l'avance, avant d'atteindre le moment $t_s$, de sorte que le moteur est raccordé à peu près à l'instant $t_s$ à la tension d'alimentation.

**2.** Procédé selon la revendication 1, **caractérisé en ce que**, après une séparation du moteur d'une tension d'alimentation, la nouvelle mise à disposition de la tension d'alimentation s'effectue soit par le réseau initial soit par un réseau de réserve.

**3.** Procédé selon la revendication 1 ou 2, **caractérisé en ce que** le moteur triphasé est réalisé avec trois branches et les courbes dans le temps de la tension de champ résiduel et de la tension d'alimentation sont obtenus à chaque fois avec deux enregistreurs de mesure.

**4.** Procédé selon l'une des revendications 1 à 3, **caractérisé en ce que** les instants des passages par zéro de la tension du champ résiduel sont déterminés et la vitesse angulaire et la variation de la vitesse angulaire de la tension de champ résiduel sont déterminées à partir des intervalles de temps entre les passages par zéro.

**5.** Procédé selon l'une des revendications 1 à 4, **caractérisé en ce que** le calcul préalable des courbes dans le temps de la tension de réseau s'effectue à partir d'un passage par zéro en supposant une fréquence de réseau constante et le calcul à l'avance de la courbe dans le temps de la tension de champ résiduel s'effectuant à partir d'un passage par zéro en tenant compte de la vitesse angulaire déterminée actuellement et de la variation dans le temps déterminée de la vitesse angulaire.

6. Procédé selon l'une des revendications 1 à 5, **caractérisé en ce que**, en plus de la détermination de la variation dans le temps de la tension de champ résiduel et de la tension d'alimentation, on détermine au moins également l'amplitude de la tension de champ résiduel.

7. Procédé selon la revendication 6, **caractérisé en ce que**, lors de la chute de l'amplitude de la tension de champ résiduel au-dessous d'une tension maximale prédéfinie, l'instruction de commutation pour la remise en circuit est déclenchée indépendamment de la corrélation de phase entre la tension de champ résiduel et la tension d'alimentation.

8. Commutation électrique qui met en oeuvre le procédé selon l'une des revendications 1 à 7 avec un enregistrement de valeur de mesure (1), qui peut être raccordé pour déterminer des courbes dans le temps des phases d'une tension de champ résiduel et d'une tension d'alimentation, d'une part à un moteur triphasé et d'autre part à un réseau d'alimentation ou un réseau de réserve, comprenant un convertisseur direct de courant continu (3) pour générer une impulsion de commutation pour un commutateur de puissance et un microcontrôleur (2), qui permet un calcul préalable de la relation de phase entre la tension de champ résiduel et la tension d'alimentation.

9. Circuit électrique selon la revendication 8, **caractérisé en ce que** l'enregistrement de la valeur de mesure (1) présente des têtes palpeuses pour le raccordement au moteur triphasé et à la tension d'alimentation.

10. Circuit électrique selon la revendication 8 ou 9, **caractérisé en ce que** le microcontrôleur (2) présente une interface de programmation standard pour le raccordement à un ordinateur ou à un réseau informatique.

11. Circuit électrique selon l'une des revendications 8 à 10, **caractérisé en ce que** le circuit présente un affichage d'état (5) et/ou une interface pour l'édition de messages d'état.

12. Circuit électrique selon l'une des revendications 8 à 11, **caractérisé en ce que** le microcontrôleur (2) présente un convertisseur analogique-numérique, un comparateur analogique, une minuterie et une mémoire de valeur mesurée.

13. Circuit électrique selon l'une des revendications 8 à 12, **caractérisé en ce qu'**une sortie du microcontrôleur (2) est raccordée comme signal de commande à un transistor à effet de champ (FET/MOSFET), qui relie une tension d'entrée séparée à un côté sortie du convertisseur direct de courant continu (3).

**IN DER BESCHREIBUNG AUFGEFÜHRTE DOKUMENTE**

**In der Beschreibung aufgeführte Patentdokumente**

- WO 2005112248 A1

**In der Beschreibung aufgeführte Nicht-Patentliteratur**

- *Archiv für Elektrotechnik,* 1988, vol. 71, 399-411
- *ELEKTRIE,* 1992, vol. 46, 456-460